# EUROPÄISCHE PATENTSCHRIFT

(11) **EP 1 060 922 B1**
(45) Veröffentlichungstag und Bekanntmachung des Hinweises auf die Patenterteilung: **14.01.2004**
(21) Anmeldenummer: 00250188.0
(22) Anmeldetag: 19.06.2000
(51) Int. Cl.: B60J 7/057

(54) **Schaltkreis und Verfahren zur Steuerung fremdkraftsbetriebener Fensterheber, Schiebedächer oder Türschlösser in Kraftfahrzeugen**
Control circuit and method for power operated windows, sliding roofs or door locks in motor vehicles
Circuit et procédé de commande de lève-vitre électrique, de toit coulissant, ou de serrure automatique pour portes pour véhicule automobile

(30) Priorität: 19.06.1999 DE 19928101; 25.06.1999 WO PCT/DE99/01900
(43) Veröffentlichungstag der Anmeldung: 20.12.2000
(73) Patentinhaber: Brose Fahrzeugteile GmbH & Co. KG, 96450 Coburg (DE)
(72) Erfinder: Übelein, Jörg, 96271 Grub am Forst (DE); Aab, Volker, 96145 Sesslach-Heiligersdorf (DE); Seeberger, Jürgen, 96148 Baunach (DE)
(74) Vertreter: Baumgärtel, Gunnar, Dr.

(56) Entgegenhaltungen:
- EP-A- 0 685 356
- EP-A- 0 869 040
- EP-A- 0 978 401
- EP-A- 0 978 402
- EP-A- 1 053 897
- US-A- 5 574 315

## Beschreibung

Die Erfindung betrifft ein Verfahren und einen Schaltkreis zur Steuerung fremdkraftbetriebener Fensterheber, Schiebedächer oder Türschlösser in Kraftfahrzeugen mit einer elektromechanischen Antriebsvorrichtung entsprechend dem Oberbegriff des Anspruchs 1 Beziehungsweise 19. Eine entsprechende Steuerschaltung ist aus der EP 0 869 040 A2 bekannt.

Aus dem Stand der Technik ist bekannt, im Kraftfahrzeug zur Datenübertragung zwischen verschiedenen elektronisch gesteuerten Einrichtung die Bus-Technologie einzusetzen. So stehen beispielsweise die einzelnen Türsteuergeräte der Tür über die der jeweilige Fensterheber und das jeweilige Schloß gesteuert werden untereinander und mit einem zentralen elektronischen Steuerungsmodul des Kraftfahrzeugs in Verbindung. Vom zentralen Steuerungsmodul werden Freigabesignale generiert, von denen Funktionen der Türsteuergeräte beziehungsweise der davon gesteuerten Verstelleinrichtungen (Fensterheber, Schloß) abhängig sind.

Es hat sich herausgestellt, daß schon beim Ausfall eines Teils der über den Bus verbundenen elektrischen Schaltkreise (zentrales Modul oder dezentrale Steuerungsgeräte) wichtige oder sogar sämtliche Funktionen der Verstelleinrichtungen blockiert sein können, weil ein ausgefallener elektronischer Schaltkreis nicht mehr die Daten liefern konnte, die zur Generierung von Freigabesignalen notwendig waren. Infolgedessen kann es zu einer Gefährdung der Insassen eines Fahrzeugs kommen, wenn die Verstelleinrichtungen auf Steuerbefehle nicht oder falsch reagieren. Die beschriebene Situation ist vorallem deshalb unbefriedigend, weil die technische Funktionalität der Verstelleinrichtungen mit intakten dezentraten elektronischen Schaltkreisen an sich uneingeschränkt weiterhin vorhanden wäre.

Der Ausfall von Teilen des Bus-Systems, z.B. verursacht durch Wassereinbruch, Brand oder mechanische Einwirkungen (insbesondere Crash), kann vor allem bei unfallbedingten Notsituationen zu zusätzlichen Gefährdungen führen.

Aus der EP 0 869 040 A2 ist eine Master-Control-Einheit und eine Slave-Einheit für einen Fensterheber bekannt, die über eine "multiplex communication line" in Verbindung stehen. Mit einem manuellen Leistungsstromschalter kann ein Motorstrom für einen Fensterhebermotor in Richtung Öffnen geschalten werden, auch wenn ein Fehler in der "multiplex communication line" auftritt. Manuelle Leistungsstromschalter sind jedoch sehr aufwendig herzustellen und teuer. Bei der EP 0 869 040 A2 dargelegten Lösung wird jedoch der Leistungsstromschalter nur im Notfall und dort ausschließlich verwendetet, so daß die Funktionsfähigkeit bis zu einem eintretenden Notfall nicht überprüft wird; im Falle der Funktionsunfähigkeit ist dem manuellen Leistungsstromschalter im Notfall ein zusätzlicher Unsicherheitsfaktor immanent,da dieser manuelle Leistungsschalter lediglich eine nicht-überprüfte Redundanz für das Fensterhebersystem darstellt.

Der Erfindung liegt daher die Aufgabe zu Grunde, einen Schaltkreis zur Steuerung fremdkraftbetriebener Fensterheber, Schiebedächer oder Schlösser in Kraftfahrzeugen anzugeben, der ohne zusätzliche Redundanz des steuernden Bedienungsschalters die Sicherheit in einem Notbetrieb verbessert. Eine weiterer Teil der Aufgabe ist zu dem Schaltkreis ein Verfahren anzugeben, um die Verfügbarkeit der Verstelleinrichtung durch den Schaltkreis, der beispielsweise durch einen Defekt eines mit dem Schaltkreis kommunizierenden Bus-Systems oder Verbindungen des Schaltkreises gestört wird, zu verbessern und gleichzeitig Fehlfunktionen des Schaltkreises zu reduzieren.

Diese Aufgabe wird durch den Schaltkreis mit den Merkmalen des Patentanspruchs 1 und das Verfahren mit den Merkmalen des Patentanspruchs 19 gelöst. Vorteilhafte Weiterbildungen der Erfindung sind den Unteransprüchen zu entnehmen.

Demnach ist ein Eingangspegel mindestens eines Anschlusses eines Leistungstreibers durch eine logische UND-Verknüpfung (eines Schaltzustandes) eines Bedienungsschalters und eines Schaltelementes definiert. So kann besonders vorteilhaft der Bedienungsschalter zugleich für den Normalbetrieb und den Notbetrieb verwendet werden, ohne daß zwischen einem Normalbetrieb und einem Notbetrieb eine Umschaltung nötig ist. Die Funktionsfähigkeit und Zuverlässigkeit des Bedienungsschalters für den Notbetrieb ist somit jederzeit überprüfbar und kann bereits anhand der Betätigung in einem Normalbetrieb von einem Fahrzeuginsassen automatisch mit überwacht werden.

Die UND-Verknüpfung ermöglicht nur dann eine Ansteuerung des Leistungstreibers, wenn sowohl der Bedienungsschalter betätigt ist als auch das Schaltelement die UND-Verknüpfung erfüllt, sich insbesondere im eingeschaltenen Zustand befindet. In diesem Fall ist der Leistungstreiber so ausgelegt, daß der nun anliegende Eingangspegel durch die Bestromung der elektromechanischen Antriebsvorrichtung eine Verstellung des Fensterhebers oder des Schiebedachs bewirkt.

Das Schaltelement stellt sicher, daß die Ansteuerung des Leistungstreibers durch den Bedienungsschalter durch ein Kontrollelement, beispielsweise ein Türschloßschalter einer Kraftfahrzeugtür, zu- und abschaltbar ist. Dadurch kann verhindert werden, daß für einen Mißbrauch, insbesondere dem Diebstahl des Fahrzeuges, der Schaltkreis gezielt beschädigt wird, um eine Öffnung der Fensterscheibe durch eine Betätigung des Bedienungsschalters zu erreichen.

Ein derartiges Abschalten der Ansteuerung wird in einer vorteilhaften Ausgestaltung der Erfindung durch den Schaltkreis kontrolliert, indem Daten zur Ansteuerung des Schaltelementes einfach oder mehrfach verifiziert werden. So kann in einer Notsituation wirkungsvoll unterbunden werden, daß die UND-Verknüpfung als eingeschaltete Diebstahlsicherung eine Ansteuerung des Leistungstreibers zum Öffnen der Fensterscheibe durch einen in Gefahr befindlichen Insassen, der das Kraftfahrzeug verlassen möchte, verhindert.

Der Leistungstreiber ist im Notbetrieb zumindest über den Bedienungsschalter vorzugsweise in Richtung öffnen ansteuerbar. Weitere Schalter oder Bedienungsschalter, können zusätzlich in einem Notbetrieb ein Öffnen des Fensters veranlassen, in dem zum Bedienungsschalter beispielsweise ein Sicherheitsschaltelement oder ein Automatikschaltelement parallel geschalten ist. Fällt beispielsweise der Bedienungsschalter aufgrund eines mechanischen Defektes aus, so kann in einem Notbetrieb das Fenster auch durch einen anderen Bedienungsschalter, beispielsweise den Bedienungsschalter zum Schließen des Fensters oder dem Hebel zum Öffnen der Fahrzeugtür, das Fenster geöffnet werden.

Die Anzahl der Eingangspegel richtet sich nach der Art des Leistungstreibers. Beispielsweise weist eine Spule eines Relais zwei Anschlüsse auf. Die UND-Verknüpfung bestimmt den Potentialunterschied der Eingangspegel zwischen den beiden Anschlüssen der Spule des Relais und damit, ob die Spule mit einen Steuerstrom durchflossen wird. Wird beispielsweise eine Halbleiterbrücke als Leistungstreiber verwendet, werden die einzelnen Transistoren der Brücke einzeln oder gruppiert an einen Anschluß direkt oder über entsprechende Treiber, beispielsweise Ladungspumpen, angeschlossen und mit dem Eingangspegel angesteuert.

Als Bedienungsschalter eignen sich alle Tipp-, Druck-, oder Tastschalter oder weiteren hierfür geeigneten Schalter. Je nach Anforderung durch den Leistungstreiber können die Bedienungsschalter als Kleinleistungsschalter oder leistungslose Potentialschalter, beispielsweise kapazitive Schalter, ausgelegt werden. Eine Halbleiterbrücke soll beispielsweise niederohmig durch einen Treiber angesteuert werden. Soll der Bedienungsschalter die Bestromung eines Relais ermöglichen, ist das Schalten eines für das Anziehen des Relais notwendigen Relaisstromes durch den Bedienungsschalter, beispielsweise einem Kleinleistungsschalter, sicherzustellen.

In Abhängigkeit vom Erkennen eines Ausfalls, beispielsweise eines spezifischen Fehlerbildes wird in einer Ausgestaltung der Erfindung der Schaltkreis in einen, an den Ausfall beispielsweise angepaßten Notbetrieb übergehen. Bei dem Spezifizieren der Funktionen des Notbetriebes, also welche Funktionen noch zugelassen, eingeschränkt verfügbar oder gesperrt sind, werden auch die dem Ausfall entsprechenden Risiken für Fehlfunktionen berücksichtigt. Durch diese differenzierte Problemlösung wird einerseits erreicht, daß beim Auftreten von Ausfällen im System einerseits noch eine vergleichsweise hohe (gewissermaßen maximierte) Verfügbarkeit von Funktionen zur Verfügung gestellt wird und andererseits das Risiko für den Insassen minimiert wird.

In einer besonders vorteilhaften Ausbildung der Erfindung ist eine Änderung des Steuerpegels des Schaltelementes durch die Abarbeitung einer Sicherheitsroutine im Schaltkreis verifizierbar. Als Sicherheitsroutine wird beispielsweise ein ARQ-Protokoll (Automatic Request Protokoll) verwendet. Es können aber auch alle weiteren hierfür zweckmäßigen Routinen, beispielsweise eine Checksumme, verwendet werden. Aufgrund der geringen Datenmengen der Steuerpegel können, ohne nennenswerte Verluste der Systemperformanz hinnehmen zu müssen, die Steuerpegel mehrmals oder mit großer Redundanz übertragen werden, wobei die übertragenen Steuerpegel in der Sicherheitsroutine auf Fehler hin überprüft werden.

Entsprechend einer vorteilhaften Weiterbildung der Erfindung ist ein Steuerpegel zum Steuern des Schaltelementes in einem statischen Speicher, beispielsweise einem Flip-Flop, gespeichert. Als Speicher eignen sich beispielsweise statische CMOS-Speicher, die aufgrund ihrer geringen Stromaufnahme für ein kurzzeitiges Abfallen der Versorgungsspannung gepuffert werden können. Noch günstiger ist die Verwendung nichtflüchtiger Speicher, beispielsweise EEPROMs, die auch für einen längeren Ausfall der Betriebspannung den Speicherinhalt nicht verlieren. Zudem können im EEPROM-Speicher die Schaltzustände und Fehlermeldungen der Sicherheitsroutine in einem Logfile protokolliert werden. Als Steuerpegel sind eine logische Eins oder logische Null einer CMOS-Logik oder andere Logikpegel wie TTL-Logikpegel, oder ein Bitmuster oder für die Ansteuerung günstige analoge Spannungspegel möglich.
Ein Ausgang des statischen Speichers ist mit dem Schaltelement zum Steuern verbunden. Ist der Ausgang direkt mit dem Schaltelement, beispielsweise On-Chip verbunden wird die Wahrscheinlichkeit von Fehlern durch elektrostatische oder magnetische Störungen reduziert. Zusätzlich kann der Ausgang mit dem Eingang eines Elementes zur Anzeige des Schaltzustandes verbunden sein. Wird eine Halbleiterbrücke als Leistungstreiber verwendet, werden vorteilhafterweise der Speicher, das Schaltelement und die Treiber zur Ansteuerung der Halbleiterbrücke auf einem Halbleiter-Chip integriert.

Weiterhin kann vorgesehen sein, daß im Falle einer Zerstörung der Speicher oder Löschung der Steuerpegel im Speicher das Schaltelement eingeschalten ist, um einen Notbetrieb durch eine Ansteuerung des Leistungstreibers in Richtung Öffnen zu ermöglichen. Hierzu wird beispielsweise ein hochohmiger Pull-up-Widerstand zwischen dem Gate eines NMOS-Transistors als Schaltelement und der Betriebspannung angeordnet. Die Zerstörung beispielsweise eines nichtflüchtigen Speichers kann durch hochenergetische Röntgenstrahlen verursacht werden.

In einer vorteilhaften Ausgestaltung der Weiterbildung ist durch eine Kontrolleinheit der zu speichernde Steuerpegel überprüfbar. Hierzu wird der Steuerpegel und mögliche weitere zu speichernde Daten von der Kontrolleinheit einfach oder mehrfach auf die Richtigkeit überprüft und zur Betriebsart, beispielsweise dem Notbetrieb, in Relation gesetzt, bevor der Steuerpegel, beispielsweise durch einen Speicherbefehl, einem sogenannten Latch-Befehl, in dem Speicher eingelesen wird. Bis zum korrekten Empfang des Latch-Befehls behält der Speicher dabei die zuvor gespeicherten Pegel als Ausgangssignale.

In einer vorteilhaften Weiterbildung der Erfindung ist der Speicher und die Kontrolleinheit über eine serielle Datenleitung mit dem Mikrocontroller verbunden. Der Steuerpegel wird über die serielle Datenleitung als Verbindung übertragen. Mittels eines Protokolls wird die Richtigkeit der übertragenen Daten von der Kontrolleinheit und dem Mikrocontroller überprüft. So kann vorteilhaft die gesicherte Übertragung sicherheitsrelevanter Daten, hier mindestens der Steuerpegel, zumindest für einen Mindestzeitraum sichergestellt, und so die sicherheitsrelevanten Funktionen weiterhin zu Verfügung gestellt werden.

Das Protokoll erlaubt für eine bidirektionale serielle Datenleitung eine Anforderung der bereits gesendeten Daten unter verschärften Voraussetzungen, beispielsweise dem Wassereintritt in die Kraftfahrzeugtür und dem dadurch verursachten Ausfall von Funktionseinheiten, beispielsweise eines Quarzes als externen Taktgeber, wie sie in einem Notbetrieb auftreten können. Hierzu werden die zuvor gesendeten Daten der Steuerpegel in einem Vergleichsspeicher zwischen gespeichert und zum Vergleich erneut übertragen.

Für ein für die Erfindung wesentliches Verfahren wird die Bedienung der elektromagnetischen Antriebsvorrichtung durch ein Schaltelement freigegeben. Die Freigabe ermöglicht das manuelle oder automatische Verstellen durch die Antriebsvorrichtung für einen vorgesehenen Zeitraum, mit bestimmten zeitlichen Verzögerungen des Einschaltens oder Umschaltens der Antriebsvorrichtung. Für die Freigabe werden äußere und antriebsvorrichtungsspezifische Parameter von dem Mikrocontroller vorteilhafterweise ausgewertet.

Der Schaltzustand des Schaltelementes wird vor einem möglichen Notbetrieb durch die Abarbeitung einer Sicherheitsroutine verifiziert. Die Sicherheitsroutine ist in einer Ausgestaltung der Erfindung ein in dem Mikrocontroller programmierter Programmablauf, der alle sicherheitsrelevanten Parameter der Antriebsvorrichtung und weiterer über Verbindungen mit dem Mikrocontroller in Verbindung stehenden elektronischen Vorrichtungen oder Elektronikeinheiten oder elektronischen Komponenten abfragt und überprüft. Die Sicherheitsroutine wird vor einem möglichen Notbetrieb, beispielsweise beim Aufschließen der Kraftfahrzeugtür oder dem Starten des Motors, abgearbeitet, so daß die Bedienung der elektromagnetischen Antriebsvorrichtung, durch eine entsprechende Freigabe der Antriebsvorrichtung durch das Schaltelement für einen Notbetrieb gewährleistet ist.

In einer ersten von zwei bevorzugten Varianten zur Verifikation ist vorgesehen, daß der Steuerpegel von einem Mikrocontroller über eine bidirektionale serielle oder parallele Datenleitung zum Speicher und zurück übertragen wird. Der Steuerpegel wird im Mikrocontroller verifiziert, und anschließend wird von dem Mikrocontroller ein Speicherbefehl (latch) zur Speicherung des Steuerpegels an den Speicher übertragen. In der zweiten Variante ist alternativ vorgesehen, daß der Steuerpegel von einem Mikrocontroller über eine Datenleitung zum Speicher übertragen wird, und der übertragene Steuerpegel von einer Kontrolleinheit verifiziert wird, die die Speicherung der verifizierten Steuerpegel im Speicher steuert. Die Datenleitung ist in dieser Variante unidirektional oder bidirektional.

In einer vorteilhaften Weiterbildung der Erfindung ist ein Schaltzustand des Schaltelementes oder des Bedienungsschalters durch einen Mikrocontroller zur Überwachung auswertbar. Die Überwachung durch den Mikrocontroller ermöglicht bereits eine frühzeitige Fehleranalyse, die rechtzeitig von einem Servicefachmann vorgenommen werden kann. Der Schaltzustand des Schaltelementes oder der Bedienungsschalters kann fehlerhaft sein, was das Risiko für einen Notfall zusätzlich erhöht und einen Notbetrieb zur Öffnung der Fensterscheibe beeinträchtigt.

Zur Überwachung ist das Schaltelement oder der Bedienungsschalter mit einem Eingang des Mikrocontrollers verbunden. Insbesondere ist die Verbindung vom Schaltelement oder Bedienungsschalter zum Leistungstreiber zusätzlich mit dem Mikrocontroller verbunden. So kann vom Mikrocontroller besonders vorteilhaft beispielsweise ein Kleben eines Kontaktes des Bedienungsschalters oder das Durchbrennen des Schaltelementes detektiert werden.

Als Leistungstreiber dienen vorteilhafterweise ein Relais oder eine Halbleiterbrücke. Ein Spulenstrom des Relais ist durch den Bedienungsschalter zur Ansteuerung schaltbar, indem der Bedienungsschalter direkt oder über das Schaltelement mit dem Anschluß der Spule des Relais verbunden ist. Sind mehrere Relais' zur Bestromung der elektromechanischen Antriebsvorrichtung vorgesehen, werden die jeweiligen Anschlüsse gemeinsam oder zeitversetzt angesteuert.
Für eine Halbleiterbrücke ist mindestens ein Eingangspegel des Anschlusses, vorzugsweise in Richtung Öffnen, der Halbleiterbrücke durch den Bedienungsschalter schaltbar. Werden vier Einzeltransistoren der Brücke einzeln angesteuert, wird der sogenannte high-side- und der low-side-Transistor zum Öffnen der Fensterscheibe angesteuert.

Für eine Variante der Erfindung sind das Schaltelement und der Bedienungsschalter in einer Reihenschaltung als logische UND-Verknüpfung angeordnet. Das Schaltelement ist vorzugsweise ein Schalttransistor, beispielsweise ein PMOS-Transistor, so daß ein Spulenstrom eines Relais sowohl die Spule des Relais als auch das Schaltelement (PMOS-Transistor) und den Bedienungsschalter durchfließt. Für die Reihenschaltung ist es nicht nötig, daß das Schaltelement und der Bedienungsschalter direkt miteinander verbunden sind. Zudem kann eine Auswertung des Spulenstroms weitere Analysefunktionen, beispielsweise zur Überprüfung der Funtkionsfähigkeit des Relais, ermöglichen.

In einer weiteren Variante der Erfindung ist das Schaltelement eine schaltbare Stromquelle oder eine schaltbare Spannungsquelle. So wird besonders vorteilhaft die Sicherheit der Steuerpegel am Anschluß des Leistungstreibers, insbesondere einer Halbleiterbrücke erhöht. Der Verringerung des Eingangspegels, möglicherweise durch Feuchtigkeit verursachte Parallelwiderstände, kann vorteilhafterweise mit der Verwendung von Spannungsquellen entgegengewirkt werden. Zudem wird ermöglicht die parasitären Parallelwiderstände mit Hilfe einer Spannungsquelle oder Stromquelle zu detektieren und das Risiko von nicht eindeutigen Steuerpegeln durch entsprechendes Umschalten zu minimieren.

In einer alternativen Variante der Erfindung ist das Schaltelement ein Teil eines Gatters als logische UND-Verknüpfung. Die Stellung des mit einem Eingang des Gatters verbundenen Bedienungsschalters definiert einen Eingangswert des Gatters. So wird besonders vorteilhaft eine logische Auswertung mit einem Treiber für größere Ausgangsströme ermöglicht. Zudem ist die zusätzliche Verknüpfung mit weiteren Bedingungen vorteilhafterweise logisch auswertbar. Eine weitere Bedingung ist beispielsweise die zeitliche Verzögerung der Ausgabe des Steuerungspegels, die einen Stillstand der Antriebsvorrichtung im Falle eines Umschaltens der Bewegungsrichtung ermöglicht.

Vorzugsweise wird im Notbetrieb von einem Mikrocontroller jedes als gültig erkannte Signal als Notsignal interpretiert. Dementsprechend führt die Betätigung eines beliebigen Bedienungsschalters unabhängig von der Richtung des Steuerbefehls immer zum Öffnen der Fensterscheibe, vorzugsweise zum automatischen Öffnen. Jede Schloßbetätigung führt unabhängig von der Richtung des Steuerbefehls stets zum Entriegeln des Schlosses oder zum automatischen Öffnen der Fensterscheibe. Ein im Notfall in einem Fahrzeug eingeschlossener Insasse kann so das Fahrzeug verlassen, indem der Notbetrieb in Abhängigkeit der verbleibenden funktionsfähigen Vorrichtungen entsprechend einem Fehlerbild mindestens eine Not-Öffnung des Kraftfahrzeugs, also ein Fenster oder eine Kraftfahrzeugtür, automatisch öffnet.

In einer besonders vorteilhaften Weiterbildung der Erfindung wird zur Aktivierung einer Diebstahlsicherung außerhalb eines Notbetriebes das Schaltelement nach der Verifikation geöffnet. Die Verifikation wertet dabei alle sicherheitsrelevanten Parameter aus, ob sich beispielsweise in dem Kraftfahrzeug noch eine Person befindet, ob ein Crash vorliegt und die Crashsensoren indizieren, daß es sich bei der Aktivierung der Diebstahlsicherung um eine Fehlmeldung handelt. Alternativ oder zusätzlich werden die Daten zur Aktivierung mehrmals übertragen, um deren Richtigkeit mit der nötigen Redundanz sicherzustellen. Vorteilhafterweise wird außerhalb des Notbetriebes die Diebstahlsicherung mit der Rückmeldung aller Knoten eines CAN-Busses, die eine Sicherheitsfunktion betreffen, aktiviert. Die Rückmeldung aller Knoten beim Herunterfahren des CAN-Bus-Systemes stellt sicher, daß kein Knoten durch Crash-bedingte Fehlfunktionen die Diebstahlsicherung ausgelöst hat, was für den in einen Crash verwickelten Insassen eine zusätzliche Gefährdung bedeuten würde.

Zeigt die Verifikation dagegen an, daß es sich um ein ordnungsgemäßes Parken und Abschließen des Kraftfahrzeugs handelt, wird die Bedienung der elektromagnetischen Antriebsvorrichtung zumindest in Richtung Öffnen gesperrt, um das Eindringen eines Diebes durch Beschädigung oder Manipulation des Bedienungsschalters zu erschweren.

Im Folgenden wird die Erfindung anhand von Ausführungsbeispielen bezugnehmend auf zeichnerische Darstellungen näher erläutert.

Dabei zeigen
- FIG 1: eine schematische Darstellung eines Schaltkreises für ein Türsteuergerät,
- FIG 2: eine schematische Darstellung eines Teils eines Schaltkreises mit logischen Gattern,
- FIG 3: eine schematische Darstellung eines Schaltkreises mit einer Stromquelle,
- FIG 4: eine schematische Darstellung eines Schaltkreises mit einer Leistungs-Halbleiterbrücke, und
- FIG 5: eine schematische Darstellung eines Schaltkreises mit einem Ausführungsbeispiel einer Auswerteelektronik.

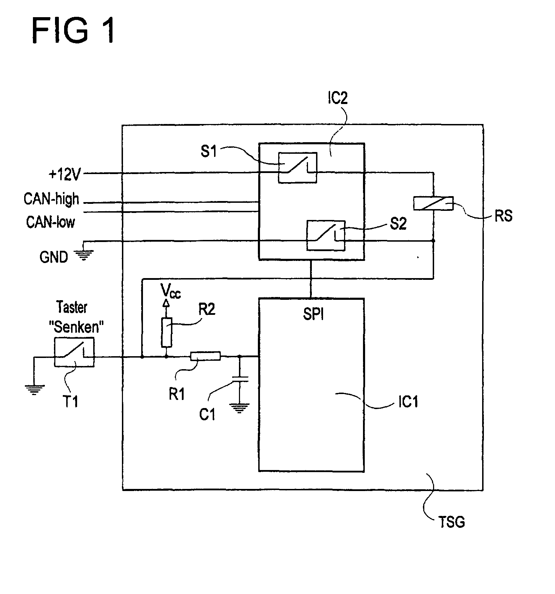

In FIG 1 ist ein Teil eines Schaltkreises für ein Türsteuergerät TSG eines Kraftfahrzeugs darstellt. Demnach erteilt ein Mikrocontroller IC1 die Freigabe für die Funktion "Senken" durch Zuschalten der Betriebsspannung (über ein Schaltelement S1) für eine Relaisspule RS. Die Freigabe wird in Abhängigkeit diverser Freigabeinformationen gebildet, die dem Türsteuergerät TSG beispielsweise über eine Bus-Schnittstelle zugeführt werden (gemäß FIG 1 ist dies ein CAN-Bus). Darüber hinaus werden Signale und Ereignisse, die auf einen Notfall schließen lassen (z.B. Crash-Signal vom Airbag-Steuergerät) bei der Generierung der Freigabe berücksichtigt.

Die mit dem Schaltelement S1 geschaltene Relaisspannung wird erst dann wieder abgeschaltet, wenn ein definitiver Befehl zum Sperren der Funktion "Senken" am Bus (CAN-high, CAN-low) übertragen wird. Die Anordnung stellt sicher, daß die Freigabe und Sperrung der Funktion "Senken" nur bewußt (durch ein definiertes serielles Signal über eine beispielsweise serielle Schnittstelle SPI) erfolgen kann. Zufällige Eingangssignale aufgrund von Störeinflüssen, z.B. Feuchtigkeit in dem Schaltkreis, können zu keiner fehlerhaften Freigabe oder Sperrung führen.

Das direkte, den Mikrocontroller IC1 umgehende Ansteuern des Senken-Relais RS ist demnach solange freigegeben, bis ein gültiger Sperrbefehl erkannt wird. Tritt ein Notfall ein, z.B. ein Bus-Abriß bei Crash-Einwirkung oder Steuergeräteausfall bei Wassereintritt, bleibt das Schaltelement S1 geschlossen, d.h. der direkte Zugriff auf die Relaisspule RS des Senken-Relais RS bleibt wenigstens für eine Mindestzeitdauer freigegeben. Dagegen wird beispielsweise die Funktion "Scheibe schließen" im Notfall sinnvollerweise gesperrt.

Über das Automatikschaltelement S2 können zudem Komfortfunktionen oder auch Notlauffunktionen (z.B. automatisches Öffnen der Scheibe oder Ansteuerung über Schlüsselschalter/Funk) durch den Mikrocontroller eingeleitet werden.

Das Automatikschaltelement S2 ist in der weitestgehenden Ausführung in einer logischen ODER-Verknüpfung mit dem Bedienungsschalter T1. So daß das Relais RS als Leistungstreiber RS in einem Notbetrieb oder auch außerhalb des Notbetriebes für Komfortfunktionen (einen Automatiklauf) ansteuerbar ist. In einem Notbetrieb kann besonders vorteilhaft ein defekter Bedienungsschalter T1 durch andere Bedienungselemente ersetzt werden, indem der Mikrocontroller IC1 den Defekt vom Bedienungsschalter T1 erkennt und durch die Ansteuerung des Automatikschaltelementes S2 ersetzt.

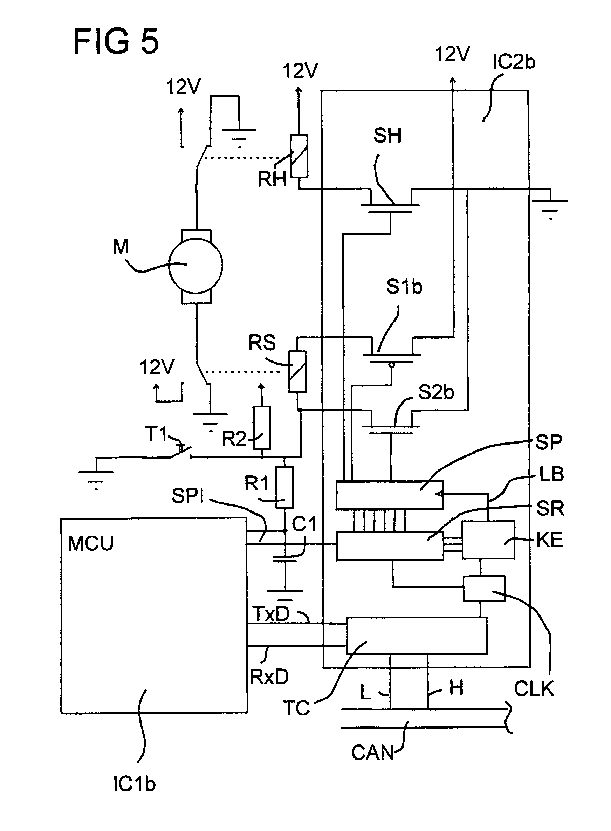

In FIG 1 ist lediglich der Bedienungsschalter T1 als Taster für die Richtung "Senken" dargestellt. Der Bedienungsschalter für die Richtung "Öffnen" und das zugehörige Relais werden erst in FIG 5 dargestellt und sind hier in FIG 1 für die schematische Darstellung der Übersicht halber nicht dargestellt. Das Signal "Senken" wird in diesem Fall durch den Taster T1 erzeugt, indem der Taster T1 die Signalleitung nach Masse kurzschließt. Der Widerstand R2 läßt eine Auswertung des Tasters T1 durch den Mikrocontroller IC1 auch für den Fall zu, daß das Schaltelement S1 geöffnet ist. Der Widerstand R1 und der Kondensator C1 dienen zum Entstören des Prellens des Tasters T1.

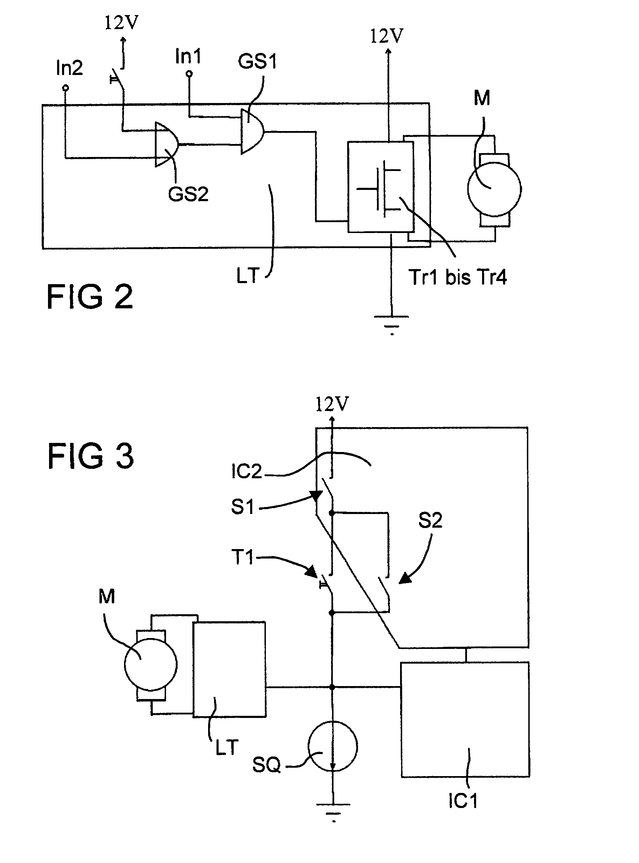

Aus der Darstellung der FIG 2 ist eine Ansteuerlogik integriert in den Leistungstreiber LT für einen Elektromotor M zu erkennen. Der Schaltkreis der Ansteuerlogik besteht aus dem UND-Gatter GS1 und dem ODER-Gatter GS2. Die Gatter sind als CMOS-Gatter oder TTL-Gatter ausführbar. Ein Teil des ODER-Gatters GS2 ist das Automatikschaltelement, daß über den ODER-Eingang In2 aus einem Speicher gesteuert wird. Über den anderen Eingang wird über den Taster T1 ein Steuerpotential von 12V für den Betriebsfall geschalten. So kann der Leistungstreiber LT durch den Taster T1 direkt angesteuert werden. Besonders vorteilhaft sind die Gatter GS1, GS2 mit den Leistungstransistoren Tr1 bis Tr4 auf einem Smart-Power-Chip integriert.

Der Ausgang des ODER-Gatters GS2 ist wiederum mit einem Eingang des UND-Gatters GS1 verbunden. Das am Ausgang des ODER-Gatters anliegende Ergebnis wird mit dem UND-Eingang In1 logisch UND-verknüpft. Der Ausgang des UND-Gatters steuert direkt oder über einen, in FIG 2 nicht dargestellten Treiber, eine Brücke aus den Transistoren Tr1 bis Tr4 des Leistungstreibers LT für den Elektromotor M. Die Details der Brücke sind in FIG 2 aus Gründen der Übersichtlichkeit nicht dargestellt. Neben den beiden Eingängen In1 und In2 können weitere, in FIG 2 nicht dargestellte Eingänge in die logische Auswertung einbezogen werden.

In FIG 3 ist eine weitere Ausführungsform der Erfindung dargestellt. Der Mikrocontroller IC1, anstelle dessen auch ein ASIC ausgeführt sein kann, steuert den Ansteuerschaltkreis IC2 für den Leistungstreiber LT. Die Anordnung des Schaltelementes S1 und des Automatikschaltlelementes S2 im Ansteuerschaltkreises IC2 sind nur schematisch dargestellt. Die Schaltelemente S1 und S2 sind beispielsweise als Schalttransistoren ausgeführt. Die Stromquelle SQ erhöht den Stromfluß über die Schaltelemente S1, S2 beziehungsweise den Taster T1.

So kann besonders vorteilhaft ein definierter Eingangspegel oder Eingangsstrom zum Ansteuern des Leistungstreibers LT verwendet werden. Die beiden in FIG 3 dargestellten IC1 und IC2 können auf einem Halbleiterchip, in einem Gehäuse, oder in separaten Gehäusen angeordnet sein. Sind sie in separaten Gehäusen angeordnet, muß sichergestellt werden, daß die Notfunktionen nicht von Verbindungen zwischen den IC's, beispielsweise Kupferleiterbahnen einer Leiterplatine abhängen, die im Falle eines Wassereinbruchs durch parasitäre Feuchtigkeitswiderstände beeinflußt oder sogar kurzgeschlossen werden können.

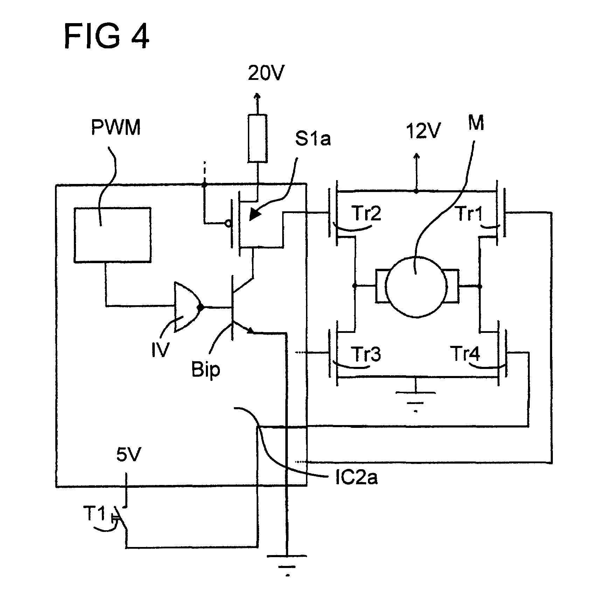

FIG 4 stellt eine weitere Variante der logischen UND-Verknüpfung schematisch dar. Die Anordnung der für die UND-Verknüpfung notwendigen Bauteile sind in FIG 4 stark vereinfacht. Es ist lediglich die UND-Verknüpfung für die Funktion "Senken" durch die Ansteuerung der zugehörigen NMOS-Transistoren Tr2 und Tr4 der Halbleiterbrücke verwirklicht. Da auch die HIGH-side Transistoren Tr1 und Tr2 NMOS-Transistoren sind, müssen diese durch eine höhere Spannung als die Betriebsspannung von 12V angesteuert werden. Hierzu wird mittels nicht dargestellter Ladungspumpen eine Spannung von 20V generiert, die über das Schaltelement S1a als UND-Verknüpfung zu- und abschaltbar ist. Der Eingang des Schaltelementes S1a ist, in FIG 4 nicht dargestellt, beispielsweise mit einem Ausgang eines Mikrocontrollers MCU verbunden.

Den zweiten Teil der UND-Verknüpfung bildet der Taster T1, der mit einer Spannung von 5V den LOW-side NMOS-Transistor Tr4 der Halbleiterbrücker ansteuert. Somit wird der Elektromotor M nur in Richtung "Senken" angesteuert, wenn sowohl der LOW-side Transistor Tr4 als auch der HIGH-side Transistor Tr2 für die Funktion "Senken" durch das Schaltelement S1a als auch durch den Taster T1 angesteuert sind und der Motorstrom die beide Leistungs-NMOS-Transistoren Tr2 und Tr4 durchfließt. Um eine Ansteuerung der Halbleiterbrücke mit einer Puls-Weiten-Modulation PWM zu ermöglichen wird das durch das Schaltelement S1a geschaltene Potential vorteilhaft über einen Transistor Bip durch das PWM-Signal gepulst. Um schnellere Schaltzeiten zu ermöglichen wir vorteilhafterweise ein Bipolartransistor Bip verwendet, der über einen Treiber oder Inverter IV angesteuert wird.

FIG 5 zeigt eine bevorzugte Ausgestaltung der Erfindung. Der Elektromotor M ist über ein Heben-Relais RH beziehungsweise über das Senken-Relais RS zur Bewegung einer Fensterscheibe schaltbar. Ein Ansteuerschaltkreis IC2b enthält neben weiterer Elektronik einen Transceiver TC, der die Signale eines CAN-Busses CAN über Eingangsleitungen L und H empfängt und zumindest teilweise überprüft. Über Signalleitungen TxD und RxD ist der Transceiver TC mit einem Mikrocontroller IC1b verbunden. Über die Signalleitung TxD und RxD sowie dem Transceiver TC kann der Mikrocontroller Daten mit weiteren Schaltkreisen oder Elektroniken, beispielsweise einem zentralen Steuerungsmodul eines Kraftfahrzeugs, austauschen.

Weiterhin ist der Mikrocontroller IC1b über eine serielle Verbindung SPI mit einem Schieberegister SR des Ansteuerschaltkreises IC2b verbunden. Der CAN-Bus CAN, die Signalleitungen TxD, RxD oder die serielle Verbindung SPI können in einer Notsituation gestört sein, aufgrund dessen der Mikrocontroller IC1b und der Ansteuerschaltkreis IC2b einen Notbetrieb starten. Die in das Schieberegister SR übertragenen Daten für die Eingangspegel der Schalttransistoren SH, S1b und S2b werden in einem Speicher SP gespeichert. Das Schaltelement S1b und der Taster T1 bilden die bereits aus FIG 1 bekannte UND-Verknüpfung.

Dem Schaltelement S1 kann ein weiteres Schaltelement, in FIG 5 nicht dargestellt, zur Erhöhung der Redundanz parallel geschalten werden, dessen weiterer Steuerpegel zum Steuern des weiteren Schaltelementes in dem statischen Speicher SP gespeichert ist, und das weitere Schaltelement mit einem Ausgang des Speichers SP verbunden ist.

Die im statischen Speicher SP gespeicherten Daten werden über die serielle Datenleitung SPI von dem Mikrocontroller IC1b an das Schieberegister SR übertragen. Zur Bedienung des Elektromotors M muß das Schaltelement S1b durch den im Speicher SP gespeicherten Steuerpegel freigegeben werden. Der Steuerpegel des Schaltelementes S1b wird vor einem möglichen Notbetrieb durch die Abarbeitung einer Sicherheitsroutine verifiziert. Die Abarbeitung der Sicherheitsroutine erfolgt in FIG 5 in einer Kontrolleinheit KE und dem Mikrocontroller IC1b mittels eines spezifischen Programmablaufes, der die Übertragung der Daten über die serielle Datenleitung optimiert. Die Sicherheitsroutine ermöglicht eine wiederholte Übertragung der Sicherheitsrelevanten Daten, insbesondere des Steuerpegels für das Schaltelement S1b. Erfolgt die Übertragung der Daten mehrfach ordnungsgemäß wird von der Kontrolleinheit KE ein Speicherbefehl (latch) generiert, der über eine Befehlsleitung LB den Speicher SP zur Speicherung triggert. Zur Aktivierung einer Diebstahlsicherung außerhalb eines Notbetriebes wird das Schaltelement S1b nach der Verifikation geöffnet wird, so daß die Bedienung des Elektromotors M zumindest in Richtung Öffnen gesperrt wird.

Wird der Elektromotor in Richtung "Heben", also dem Schließen der Fensterscheibe bestromt ist ein sofortiges Umschalten des Motorstromes in die entgegengesetzte Richtung unerwünscht, da dies die magnetischen Eigenschaften des Elektromotors verschlechtert, indem ein möglicher Dauermagnet bei einem sofortigen Umschalten des Motorstromes teilweise entmagnetisiert wird. Um diesen negativen Effekt zu reduzieren, wird der Motorstrom von Richtung Schließen in Richtung Öffnen durch den Bedienungsschalter T1 umgeschalten, indem der Elektromotor M für eine Mindestzeitspanne zwischen dem Schließen und dem Öffnen von dem Mikrocontroller IC1b im wesentlichen stromlos geschalten wird. Hierzu werden beispielsweise beide Relaisspulen der Relais RH und RS für die Mindestzeitspanne gleichzeitig bestromt, so daß beide Anschlüsse des Elektromotors M auf 12V Potential liegen und der Elektromotor M stromlos geschalten ist.

### Bezugszeichenliste

- TSG: Türsteuergerät
- IC1, IC1b, MCU: Mikrocontroller, MCU
- IC2, IC2a, lC2b: Transceiver und Schaltelemente IC, Ansteuerschaltkreis
- CAN: CAN-Bus
- high, H: CAN-Bus-Leitung
- low, L: CAN-Bus-Leitung
- T1: Taster "Senken"
- SPI: serielle Verbindung
- RS: Relais "Senken"
- RH: Relais "Heben"
- S1, S1a, S1b: Schaltelement
- S2, S2b: Automatikschaltelement
- R2: Pull-up-Widerstand
- R1, C1: Tiefpaß zum Entprellen des Tasters T1
- In1, In2: Eingänge
- GS1: UND-Gatter mit Schaltelement S1
- GS2: ODER-Gatter mit Automatikschaltelement S2
- LT: Leistungstreiber, Halbleiterbrücke, Relais
- M: elektromechanische Antriebsvorrichtung, Elektromotor
- SQ: Stromquelle
- PWM: Generator für eine Puls-Weiten-Modulation
- Tr1 bis Tr4: NMOS-Transistoren einer Halbleiterbrücke
- IV: Inverter, Treiber
- Bip: NPN-Bipolartransistor
- SH: Senkenschalter
- TC: Transceiver eines CAN-Busses
- TxD, RxD: Datenleitung zwischen Transceiver und Mikrocontroller
- CLK: CLOCK, Taktgeber
- KE: Kontrolleinrichtung
- SR: Schieberegister
- LB: Speicherbefehlsleitung, latch
- SP: Flip-Flop-Speicher
- GND: Masse

## Patentansprüche

1. Schaltkreis zur Steuerung fremdkraftbetriebener Fensterheber, Schiebedächer oder Türschlösser in Kraftfahrzeugen mit einer elektromechanischen Antriebsvorrichtung (M), die durch wenigstens einen Leistungstreiber (LT,RS,RH,Tr1 bis Tr4) bestrombar ist,
- wobei der Leistungstreiber (LT,RS,RH,Tr1 bis Tr4) im Normalbetrieb zumindest mit einem Bedienungsschalter (T1) ansteuerbar ist und
- wobei der Schaltkreis nach dem Erkennen eines Ausfalls von Funktionen oder Teilen davon oder elektrischen oder elektronischen Komponenten in einen Notbetrieb übergeht,
**dadurch gekennzeichnet, dass**
- ein Eingangspegel mindestens eines Anschlusses des Leistungstreibers (LT,RS,RH,Tr1 bis Tr4) durch eine logische UND-Verknüpfung eines Schaltzustandes des Bedienungsschalters (T1) und eines Schaltelementes (S1,S1a,S1b) definiert ist und
- der Leistungstreiber (LT,RS,RH,Tr1 bis Tr4) auch im Notbetrieb über den einen Bedienungsschalter (T1) ansteuerbar bleibt.

2. Schaltkreis nach Anspruch 1,
**dadurch gekennzeichnet, daß**
ein Steuerpegel zum Steuern des Schaltelementes (S1,S1a,S1b) in einem statischen Speicher (SP) gespeichert ist, und
ein Ausgang des statischen Speichers (SP) mit dem Schaltelement (S1,S1a,S1b) (zum Steuern) verbunden ist.

3. Schaltkreis nach Anspruch 2,
**dadurch gekennzeichnet, daß**
der statische Speicher (SP) ein nichtflüchtiger Speicher (SP) ist.

4. Schaltkreis nach einem der Ansprüche 2 oder 3,
**dadurch gekennzeichnet, daß**
im Falle einer Zerstörung des Speichers (SP) oder Löschung der Steuerpegel im Speicher (SP) das Schaltelement (S1,S1a,S1b) eingeschaltet ist, um einen Notbetrieb durch eine Ansteuerung des Leistungstreibers (LT,RS,RH,Tr1 bis Tr4) zu ermöglichen.

5. Schaltkreis nach einem der Ansprüche 2 bis 4,
**dadurch gekennzeichnet, daß**
durch eine Kontrolleinheit (KE,IC1,IC1b) der zu speichernde Steuerpegel überprüfbar ist.

6. Schaltkreis nach Anspruch 5,
**dadurch gekennzeichnet, daß**
der Speicher (SP) und die Kontrolleinheit (KE) über eine serielle Datenleitung (SPI) mit einem Mikrocontroller (IC1, IC1b) verbunden sind.

7. Schaltkreis nach Anspruch 5,
**dadurch gekennzeichnet, daß**
die Kontrolleinheit (IC1,IC1b) zumindest ein Teil eines Mikrocontrollers (IC1, IC1b) ist.

8. Schaltkreis nach einem der vorhergehenden Ansprüche,
**dadurch gekennzeichnet, daß**
ein Schaltzustand des Schaltelementes (S1, S1a, S1b) oder des Bedienungsschalters (T1) durch einen Mikrocontroller (IC1,IC1b) zur Überwachung auswertbar ist, indem das Schaltelement (S1,S1a,S1b) oder der Bedienungsschalter (T1) mit einem Eingang des Mikrocontrollers (IC1,IC1b) verbunden ist.

9. Schaltkreis nach einem der vorhergehenden Ansprüche,
**dadurch gekennzeichnet, daß**
der Leistungstreiber (LT) ein Relais (RS) ist, und
ein Spulenstrom des Relais (RS) durch den Bedienungsschalter (T1) zur Ansteuerung schaltbar ist, indem der Bedienungsschalter (T1) direkt oder über das Schaltelement (S1,S1b) mit dem Anschluß der Spule des Relais (RS) verbunden ist.

10. Schaltkreis nach einem der Ansprüche 1 bis 8,
**dadurch gekennzeichnet, daß**
der Leistungstreiber (LT) eine Halbleiterbrücke (Tr1 bis Tr4) ist, und
der Eingangspegel des Anschlusses der Halbleiterbrücke (LT4) durch den Bedienungsschalter (T1) schaltbar ist.

11. Schaltkreis nach einem der vorhergehenden Ansprüche,
**dadurch gekennzeichnet, daß**
das Schaltelement (S1,S1b) und der Bedienungsschalter (T1) in einer Reihenschaltung als logische UND-Verknüpfung angeordnet sind.

12. Schaltkreis nach Anspruch 11,
**dadurch gekennzeichnet, daß**
das Schaltelement (S1,S1b) ein Schalttransistor ist.

13. Schaltkreis nach Anspruch 11,
**dadurch gekennzeichnet, daß**
das Schaltelement (S1,S1b) eine schaltbare Stromquelle oder eine schaltbare Spannungsquelle ist.

14. Schaltkreis nach einem der Ansprüche 1 bis 10,
**dadurch gekennzeichnet, daß**
das Schaltelement (GS1) ein Teil eines Gatters (GS1) als logische
UND-Verknüpfung ist, und
die Stellung des mit einem Eingang des Gatters (GS1) verbundenen Bedienungsschalters (T1) einen Eingangswert des Gatters (GS1) definiert.

15. Schaltkreis nach einem der vorhergehenden Ansprüche,
**dadurch gekennzeichnet, daß**
mit einer logischen ODER-Verknüpfung des Bedienungsschalters (T1) und eines Automatikschaltelementes (S2,S2b) der Leistungstreiber (LT,RS,RH,Tr1 bis Tr4) auch außerhalb des Notbetriebes für eine Komfortfunktion ansteuerbar ist.

16. Schaltkreis nach einem der vorhergehenden Ansprüche,
**dadurch gekennzeichnet, daß**
dem Schaltelement (S1,S1a,S1b) ein weiteres Schaltelement zur Erhöhung der Redundanz parallel geschaltet ist, dessen weiterer Steuerpegel zum Steuern des weiteren Schaltelementes in einem weiteren statischen Speicher gespeichert ist, und
das weitere Schaltelement mit einem Ausgang des weiteren statischen Speichers verbunden ist.

17. Schaltkreis nach einem der vorhergehenden Ansprüche,
**dadurch gekennzeichnet, daß**
die elektromechanische Antriebsvorrichtung (M) von Richtung Schließen in Richtung Öffnen durch den Bedienungsschalter (T1) umschaltbar ist, indem die Antriebsvorrichtung (M) für eine Mindestzeitspanne zwischen dem Schließen und dem Öffnen von einem Mikrocontroller (IC1,IC1b) im wesentlichen stromlos schaltbar ist.

18. Schaltkreis nach Anspruch 1,
**dadurch gekennzeichnet, daß**
- das Schaltelement (S1,S1b) mit einer Versorgungsspannung und dem Leistungstreiber (LT,RS,RH,Tr1 bis Tr4) verbunden ist,
- der Bedienungsschalter (T1) mit der Masse, sowie mit dem Leistungstreiber (LT,RS,RH,Tr1 bis Tr4), einem Pull-up-Widerstand (R2) zur Versorgungsspannung und über einen Tiefpaß (R1,C1) zum Entprellen mit einem Mikrocontroller (IC1,IC1b) verbunden ist,
- zum Bedienungsschalter (T1) ein Automatikschaltelement (S2,S2b) parallel geschaltet ist, indem das Automatikschaltelement (S2,S2b) mit der Masse (GND) und dem Leistungstreiber (LT,RS,RH,Tr1 bis Tr4) verbunden ist,
- das Automatikschaltelement (S2,S2b) und das Schaltelement (S1,S1b) vom Mikrocontroller (IC1,IC1b) über eine serielle Verbindung (SPI) steuerbar sind, und
- zur Steuerung ein über die serielle Verbindung (SPI) übertragener Steuerpegel durch eine Kontrolleinheit (KE) verifizierbar ist.

19. Verfahren zur Steuerung einer Bedienung einer elektromagnetischen Antriebsvorrichtung (M) für fremdkraftbetriebene Fensterheber, Schiebedächer oder Türschlösser eines Kraftfahrzeugs, bei dem
- die Bedienung der elektromagnetischen Antriebsvorrichtung (M) mittels eines Bedienungsschalters (T1) im Normalbetrieb mit einem Schaltelement (S1,S1a,S1b) freigegeben wird und
- bei dem nach dem Erkennen eines Ausfalls von Funktionen oder Teilen davon oder elektrischen oder elektronischen Komponenten ein Notbetrieb gestartet wird,
**dadurch gekennzeichnet, dass**
- der Steuerpegel zum Steuern des Schaltelementes (S1,S1a,S1b) im Normalbetrieb, vor einem möglichen Notbetrieb, durch die Abarbeitung einer Sicherheitsroutine verifiziert wird und
- im Falle eines verifizierten Steuerpegels die Bedienung der elektromagnetischen Antriebsvorrichtung (M) mittels des einen Bedienungsschalters (T1) auch im Notbetrieb mit dem Schaltelement (S1,S1a,S1b) freigegeben bleibt.

20. Verfahren nach Anspruch 19,
**dadurch gekennzeichnet, daß**
zur Aktivierung einer Diebstahlsicherung außerhalb eines Notbetriebes das Schaltelement (S1,S1a,S1b) nach der Verifikation geöffnet wird, so daß die Bedienung der elektromagnetischen Antriebsvorrichtung (M) zumindest in Richtung Öffnen gesperrt wird.

21. Verfahren nach einem der Ansprüche 19 oder 20,
**dadurch gekennzeichnet, daß**
über eine serielle Verbindung (SPI) durch eine Kontrolleinheit (KE) und einen Mikrocontroller (IC1, IC1b) mittels eines Protokolls der Steuerpegel verifiziert wird.

22. Verfahren nach einem der Ansprüche 19 oder 20,
**dadurch gekennzeichnet, daß**
der Steuerpegel von einem Mikrocontroller (IC1) über eine bidirektionale Datenleitung (SPI) zum Speicher (SP) und zurück übertragen wird,
der Steuerpegel im Mikrocontroller (IC1) verifiziert wird, und
von dem Mikrocontroller (IC1) ein Speicherbefehl zur Speicherung des Steuerpegels an den Speicher (SP) übertragen wird.

23. Verfahren nach einem der Ansprüche 19 bis 21,
**dadurch gekennzeichnet, daß**
der Steuerpegel von einem Mikrocontroller (IC1,IC1b) über eine Datenleitung (SPI) zum Speicher (SP) übertragen wird, und
der übertragene Steuerpegel von einer Kontrolleinheit (KE) verifiziert wird, die die Speicherung der venfizierten Steuerpegel im Speicher (SP) steuert.

24. Verfahren nach einem der Ansprüche 19 bis 23,
**dadurch gekennzeichnet, daß**
im Notbetrieb von einem Mikrocontroller (IC1,IC1b) jedes als gültig erkannte Signal als Notsignal interpretiert wird, indem
- zur Bedienung die Betätigung eines beliebigen Bedienungsschalters (T1) unabhängig von der Richtung des Steuerbefehls immer zum Öffnen einer Fensterscheibe, vorzugsweise zum automatischen Öffnen führt, und
- jede Schloßbetätigung unabhängig von der Richtung des Steuerbefehls stets zum Entriegeln des Schlosses oder zum automatischen Öffnen der Fensterscheibe führt.

25. Verfahren nach einem der Ansprüche 19 bis 24,
**dadurch gekennzeichnet, daß**
die elektromechanische Antriebsvorrichtung (M) von Richtung Schließen in Richtung Öffnen verzögert umgeschalten wird, indem die Antriebsvorrichtung (M) für eine Mindestzeitspanne zwischen dem Schließen und dem Öffnen im wesentlichen stromlos geschaltet wird.

## Claims

1. Switching circuit for controlling externally powered window regulators, sliding roofs or door locks in motor vehicles comprising an electromechanical drive device (M) which can be energised by at least one driver (LT, RS, RH, Tr1 to Tr4),
- wherein the driver (LT, RS, RH, Tr1 to Tr4) can be controlled at least by one operating switch (T1) during normal operation and
- wherein the switching circuit passes to emergency operation after detecting a failure of functions or parts thereof or of electric or electronic components,
**characterised in that**
- an input level of at least one terminal of the driver (LT, RS, RH, Tr1 to Tr4) is defined by a logic AND operation of a switching state of the operating switch (T1) and of a switching element (S1, S1a, S1b) and
- the driver (LT, RS, RH, Tr1 to Tr4) can also be controlled via the one operating switch (T1) during emergency operation.

2. Switching circuit according to claim 1,
**characterised in that**
a control level for controlling the switching element (S1, S1a, S1b) is stored in a static memory (SP) and an output of the static memory (SP) is connected to the switching element (S1, S1a, S1b) (for control purposes).

3. Switching circuit according to claim 2,
**characterised in that**
the static memory (SP) is a non-volatile memory (SP).

4. Switching circuit according to either of claims 2 or 3,
**characterised in that,**
in the event of destruction of the memory (SP) or deletion of the control level in the memory (SP), the switching element (S1, S1a, S1b) is switched on to allow emergency operation by triggering the driver (LT, RS, RH, Tr1 to Tr4 ) .

5. Switching circuit according to any of claims 2 to 4,
**characterised in that**
the control level to be stored can be checked via a control unit (KE, IC1, IC1b).

6. Switching circuit according to claim 5,
**characterised in that**
the memory (SP) and the control unit (KE) are connected to a microcontroller (IC1, IC1b) via a serial data line (SPI).

7. Switching circuit according to claim 5,
**characterised in that**
the control unit (IC1, IC1b) is at least a part of a microcontroller.

8. Switching circuit according to any of the preceding claims,
**characterised in that**
a switching state of the switching element (S1, S1a, S1b) or of the operating switch (T1) can be evaluated by a microcontroller (IC1, IC1b) for monitoring purposes, since the switching element (S1, S1a, S1b) or the operating switch (T1) is connected to an input of the microcontroller (IC1, IC1b).

9. Switching circuit according to any of the preceding claims,
**characterised in that**
the driver (LT) is a relay (RS) and a coil current of the relay (RS) can be switched by the operating switch (T1) for triggering purposes, since the operating switch (T1) is connected directly or via the switching element (S1, S1b) to the terminal of the coil of the relay (RS).

10. Switching circuit according to any of claims 1 to 8,
**characterised in that**
the driver (LT) is a semiconductor bridge (Tr1 to Tr4) and the input level of the terminal of the semiconductor bridge (LT4) can be switched by the operating switch (T1).

11. Switching circuit according to any of the preceding claims,
**characterised in that**
the switching element (S1, S1b) and the operating switch (T1) are connected in series as a logic AND operation.

12. Switching circuit according to claim 11,
**characterised in that**
the switching element (S1, S1b) is a switching transistor.

13. Switching circuit according to claim 11,
**characterised in that**
the switching element (S1, S1b) is a switchable current source or a switchable voltage source.

14. Switching circuit according to any of claims 1 to 10,
**characterised in that**
the switching element (GS1) is part of a logic gate (GS1) as a logic AND operation, and the position of the operating switch (T1) connected to an input of the logic gate (GS1) defines an input value of the logic gate (GS1).

15. Switching circuit according to any of the preceding claims,
**characterised in that**
the driver (LT, RS, RH, Tr1 to Tr4) can also be controlled, for an added-feature function outside of emergency operation, by a logic OR operation of the operating switch (T1) and of an automatic switching element (S2, S2b).

16. Switching circuit according to any of the preceding claims,
**characterised in that**
a further switching element is connected in parallel with the switching element (S1, S1a, S1b) to increase redundancy and the further control level thereof for controlling the further switching element is stored in a further static memory and the further switching element is connected to an output of the further static memory.

17. Switching circuit according to any of the preceding claims,
**characterised in that**
the electromechanical drive device (M) can be switched over from the closing direction to the opening direction by the operating switch (T1), since the drive device (M) can be switched between "open" and "close" substantially without power by a microcontroller (IC1, IC1b) for a minimum period of time.

18. Switching circuit according to claim 1,
**characterised in that**
the switching element (S1, S1b) is connected to a supply voltage and to the driver (LT, RS, RH, Tr1 to Tr4), the operating switch (T1) is connected to earth and also to the driver (LT, RB, RH, Tr1 to Tr4), to a pull-up resistor (R2) for supply voltage and, via a low-pass filter (R1, C1) for debouncing purposes, to a microcontroller (IC1, IC1b), an automatic switching element (S2, S2b) is connected in parallel with the operating switch (T1), since the automatic switching element (S2, S2b) is connected to earth (GND) and to the driver (LT, RS, RH, Tr1 to Tr4), the automatic switching element (S2, S2b) and the switching element (S1, S1b) can be controlled by the microcontroller (IC1, IC1b) via a series connection (SPI), and a control level transmitted via the series connection (SPI) can be verif ied by a control unit (KE) for control purposes.

19. Method for controlling operation of an electromagnetic drive device (M) for externally powered window regulators, sliding roofs or door locks of a motor vehicle, in which
- operation of the electromagnetic drive device (M) by means of an operating switch (T1) is enabled by a switching element (S1, S1a, S1b) during normal operation and
- wherein emergency operation is started after detection of a failure of functions or parts thereof or of electric or electronic components,
**characterised in that**
- the control level for controlling the switching element (S1, S1a, S1b) is verified during normal operation, before possible emergency operation, by processing a safety routine and,
- once a control level has been verified, operation of the electromagnetic drive device (M) by means of the one operating switch (T1) remains enabled by the switching element (S1, S1a, S1b) even during emergency operation.

20. Method according to claim 19,
**characterised in that,**
to activate an anti-theft device outside of emergency operation, the switching element (S1, S1a, S1b) is opened, after verification, so operation of the electromagnetic drive device (M) is disabled, at least in the opening direction.

21. Method according to either of claims 19 or 20,
**characterised in that**
the control level is verified by a control unit (KE) and a microcontroller (IC1, IC1b) by means of a protocol via a series connection (SPI).

22. Method according to either of claims 19 or 20,
**characterised in that**
the control level is transmitted from a microcontroller (IC1) via a bidirectional data line (SPI) to the memory (SP) and back, the control level is verified in the microcontroller (IC1) and a storage command to store the control level is transmitted to the memory (SP) by the microcontroller (IC1).

23. Method according to any of claims 19 to 21,
**characterised in that**
the control level is transmitted from a microcontroller (IC1, IC1b) via a data line (SPI) to the memory (SP) and the transmitted control level is verified by a control unit (KE) which controls storage of the verified control level in the memory (SP).

24. Method according to any of claims 19 to 23,
**characterised in that,**
during emergency operation, any signal detected as being valid is interpreted as an emergency signal by the microcontroller (IC1, IC1b) since, for operating purposes, actuation of any operating switch (T1) always leads to opening of a window, preferably to automatic opening, irrespective of the direction of the control command, and each actuation of the lock always leads to unlocking of the lock or to automatic opening of the window irrespective of the direction of the control command.

25. Method according to any of claims 19 to 24,
**characterised in that**
the electromagnetic drive device (M) is switched over from the closing direction to the opening direction after a delay, since the drive device (M) is switched between "close" and "open" substantially without power for a minimum period of time.

## Revendications

1. Circuit pour la commande, dans des véhicules automobiles, de lève-vitre, de toit coulissant ou de fermeture de porte actionnés par des forces extérieures au moyen d'un dispositif d'entraînement électromécanique (M) pouvant être alimenté au moyen d'au moins un amplificateur de puissance (LT, RS, RH, Tr1 à Tr4),
- dans lequel l'amplificateur de puissance (LT, RS, RH, Tr1 à Tr4) peut être actionné, en fonctionnement normal, avec au moins un commutateur de manoeuvre (T1) et
- dans lequel le circuit, une fois détectée une défaillance de fonctions ou de parties de celui-ci ou de composants électriques ou électroniques, bascule en fonctionnement de secours,
**caractérisé en ce que**
- un niveau d'entrée d'au moins une borne de connexion de l'amplificateur de puissance (LT, RS, RH, Tr1 à Tr4) est défini par une opération logique et portant sur un état de commutation du commutateur de manoeuvre (T1) et d'un élément de commutation (S1, S1a, S1b) et
- l'amplificateur de puissance (LT, RS, RH, Tr1 à Tr4) reste actionnable également en fonctionnement de secours au moyen dudit commutateur de manoeuvre (T1).

2. Circuit selon 1a revendication 1,
**caractérisé en ce que**
un niveau de commande pour commander l'élément de commutation (S1, S1a, S1b) est enregistré dans une mémoire statique (SP), et
une sortie de la mémoire statique (SP) est connectée (en vue de le commander) à l'élément de commutation (S1, S1a, S1b).

3. Circuit selon la revendication 2,
**caractérisé en ce que**
la mémoire statique (SP) est une mémoire (SP) non volatile.

4. Circuit selon l'une des revendications 2 ou 3,
**caractérisé en ce que**
en cas de destruction de la mémoire (SP) ou d'effacement des niveaux de commande dans la mémoire (SP) l'élément de commutation (S1, S1a, S1b) est fermé pour permettre un fonctionnement de secours par une activation de l'amplificateur de puissance (LT, RS, RH, Tr1 à Tr4).

5. Circuit selon l'une des revendications 2 a 4,
**caractérisé en ce que**
le niveau de commande devant être enregistré peut être vérifié au moyen d'une unité de contrôle (KE, IC1, IC1b).

6. Circuit selon la revendication 5,
**caractérisé en ce que**
la mémoire (SP) et l'unité de contrôle (KE) sont connectées à un microcontrôleur (IC1, IC1b) par l'intermédiaire d'une ligne de données sérielle (SPI).

7. Circuit selon la revendication 5,
**caractérisé en ce que**
l'unité de contrôle (IC1, IC1b) est au moins une partie d'un microcontrôleur (IC1, IC1b).

8. Circuit selon l'une des revendications précédentes,
**caractérisé en ce que**
un état de commutation de l'élément de commutation (S1, S1a, S1b) ou du commutateur de manoeuvre (T1) est lisible pour la surveillance au moyen d'un microcontrôleur (IC1, IC1b), tandis que l'élément de commutation (S1, S1a, S1b) ou le commutateur de manoeuvre (T1) est connecté à une entrée du microcontrôleur (IC1, IC1b).

9. Circuit selon l'une des revendications précédentes,
**caractérisé en ce que**
l'amplificateur de puissance (LT) est un relais (RS), et un courant de bobine du relais (RS) est commutable pour l'actionnement au moyen du commutateur de manoeuvre (T1), tandis que le commutateur de manoeuvre (T1) est connecté directement ou par l'intermédiaire de l'élément de commutation (S1, S1b) à la borne de connexion de la bobine du relais (RS).

10. Circuit selon l'une des revendications 1 a 8,
**caractérisé en ce que**
l'amplificateur de puissance (LT) est un pont semi-conducteur (Tr1 à Tr4) et le niveau d'entrée de la borne de connexion du pont semi-conducteur (LT4) est commutable au moyen du commutateur de manoeuvre (T1).

11. Circuit selon l'une des revendications précédentes,
**caractérisé en ce que**
l'élément de commutation (S1, S1b) et le commutateur de manoeuvre (T1) sont disposés dans un branchement en série en tant qu'opérateur logique ET.

12. Circuit selon la revendication 11,
**caractérisé en ce que**
l'élément de commutation (S1, S1b) est un transistor de commutation.

13. Circuit selon la revendication 11,
**caractérisé en ce que**
l'élément de commutation (S1, S1b) est une source de courant commutable ou une source de tension commutable.

14. Circuit selon l'une des revendications 1 à 10,
**caractérisé en ce que**
l'élément de commutation (GS1) est une partie d'une porte (GS1) en tant qu'opérateur logique ET, et
la position du commutateur de manoeuvre (T1) connecté à une entrée de la porte (GS1) définit une valeur d'entrée de la porte (GS1).

15. Circuit selon l'une des revendications précédentes,
**caractérisé en ce que**
l'amplificateur de puissance (LT, RS, RH, Tr1 à Tr4) est actionnable pour un fonctionnement de confort également en dehors du fonctionnement de secours au moyen d'une opération logique OU du commutateur de manoeuvre (T1) et d'un élément de commutation automatique (S2, S2b).

16. Circuit selon l'une des revendications précédentes,
**caractérisé en ce que**
en parallèle sur l'élément de commutation (S1, S1a, S1b) est connecté un autre élément de commutation pour accroître la redondance, dont le niveau de contrôle supplémentaire destiné à contrôler l'autre élément de commutation est enregistré dans une autre mémoire statique et l'autre élément de commutation est connecté à l'une des sorties de l'autre mémoire statique.

17. Circuit selon l'une des revendications précédentes,
**caractérisé en ce que**
le dispositif d'entraînement électromagnétique (M) peut être basculé du sens de la fermeture vers le sens de l'ouverture au moyen du commutateur de manoeuvre (T1), tandis que le dispositif d'entraînement (M), pour un intervalle de temps minimal, peut être basculé sensiblement hors courant entre la fermeture et l'ouverture à partir d'un microcontrôleur (IC1, IC1b).

18. Circuit selon la revendication 1,
**caractérisé en ce que**
- l'élément de commutation (S1, S1b) est relié à une tension d'alimentation et à l'amplificateur de puissance (LT, RS, RH, Tr1 à Tr4),
- le commutateur de manoeuvre (T1) est relié à la masse ainsi qu'à l'amplificateur de puissance (LT, RS, RH, Tr1 à Tr4), une résistance de relèvement (R2) pour la tension d'alimentation et, par l'intermédiaire d'un filtre passe-bas (R1, C1) anti-oscillation, à un microcontrôleur (IC1, IC1b),
- en parallèle sur le commutateur de manoeuvre (T1) est connecté un élément de commutation automatique (S2, S2b), tandis que l'élément de commutation automatique (S2, S2b) est relié à la masse (GND) et à l'amplificateur de puissance (LT, RS, RH, Tr1 à Tr4),
- l'élément de commutation automatique (S2, S2b) et l'élément de commutation (S1, S1b) sont commandables par le microcontrôleur (IC1, IC1b) par l'intermédiaire d'une connexion sérielle (SPI), et
- pour la commande un niveau de contrôle transmis via la connexion sérielle (SPI) est vérifiable par une unité de contrôle (KE).

19. Procédé pour commander une manoeuvre d'un dispositif d'entraînement électromagnétique (M) pour lève-vitre, toit coulissant ou fermeture de porte d'un véhicule automobile, dans lequel
- la manoeuvre du dispositif d'entraînement électromagnétique (M) au moyen d'un commutateur de manoeuvre (T1) en fonctionnement normal est libérée avec un élément de commutation (S1, S1a, S1b) et
- dans lequel, une fois détectée une défaillance de fonctions ou de parties de celui-ci ou de composants électriques ou électroniques, est déclenché un fonctionnement de secours,
**caractérisé en ce que**
- le niveau de commande pour commander l'élément de commutation (S1, S1a, S1b) en fonctionnement normal, avant un éventuel fonctionnement de secours, est vérifié par l'exécution d'une routine de sécurité et
- dans le cas d'un niveau de commande vérif ié la manoeuvre du dispositif d'entraînement électromagnétique (M) au moyen du commutateur de manoeuvre (T1) reste libérée également en fonctionnement de secours au moyen de l' élément de commutation (S₁, S₁ₐ, S_{1b}).

20. Procédé selon la revendication 19,
**caractérisé en ce que**
pour l'activation d'un antivol en dehors d'un fonctionnement de secours, l'élément de commutation (S1, S1a, S1b) est ouvert après vérification, de telle sorte que la manoeuvre du dispositif d'entraînement (M) soit bloquée au moins dans le sens de l'ouverture.

21. Procédé selon l'une des revendications 19 ou 20,
**caractérisé en ce que**
le niveau de contrôle est vérifié, via une connexion sérielle (SPI), au moyen d'un protocole par une unité de contrôle (KE) et par un microcontrôleur (IC1, IC1b).

22. Procédé selon l'une des revendications 19 ou 20,
**caractérisé en ce que**
le niveau de contrôle est transmis, via une ligne de données bidirectionnelle (SPI), par un microcontrôleur (IC1) vers la mémoire (SP) et retour,
le niveau de contrôle (IC1) est vérifié dans le microcontrôleur, et
une instruction mémoire est transmise par le microcontrôleur (IC1) à la mémoire (SP), en vue de l'enregistrement du niveau de contrôle.

23. Procédé selon l'une des revendications 19 à 21,
**caractérisé en ce que**
le niveau de contrôle est transmis, via une ligne de données (SPI), par un microcontrôleur (IC1, IC1b) vers la mémoire (SP) et
le niveau de contrôle transmis est vérifié par une unité de contrôle (KE) qui commande l'enregistrement en mémoire (SP) des niveaux de contrôle vérifiés.

24. Procédé selon l'une des revendications 19 à 23,
**caractérisé en ce que**
en fonctionnement de secours chaque signal reconnu comme valide est interprété comme un signal d'alarme par un microcontrôleur (IC1, IC1b), alors que
- pour la manoeuvre, la manipulation d'un quelconque commutateur de manoeuvre (T1) conduit toujours à l'ouverture, de préférence à l'ouverture automatique, d'une vitre indépendamment de la direction de l'instruction de commande, et
- toute manipulation de fermeture conduit toujours au déverrouillage de la fermeture ou à l'ouverture automatique de la vitre, indépendamment de la direction de l'instruction de commande.

25. Procédé selon l'une des revendications 19 à 24,
**caractérisé en ce que**
le dispositif d'entraînement électromécanique (M) est basculé de façon temporisée de la direction fermeture vers la direction ouverture, tandis que le dispositif d'entraînement (M) est connecté sensiblement hors courant pour un intervalle de temps minimal entre la fermeture et l'ouverture.
